# EUROPEAN PATENT APPLICATION

(11) **EP 4 254 925 A1**
(43) Date of publication of application: **04.10.2023**
(21) Application number: 22165089.8
(22) Date of filing: 29.03.2022
(51) Int. Cl.: H04N 1/60

(54) **METHOD FOR MANUFACTURING A DECORATIVE SUBSTRATE FOR DECORATIVE PANEL**

(71) Applicant: Flooring Industries Limited, SARL, 8070 Bertrange (LU); Interprint GmbH, 59759 Arnsberg (DE)
(72) Inventor: BOUTMANS, Beauregard, 8710 Wielsbeke (BE); CLEMENT, Benjamin, 8710 Wielsbeke (BE); TADDAY, Mr. Malte, 59755 Arnsberg (DE); DAVID, Mr. Robert, 59494 Soest (DE)
(74) Representative: Unilin Technologies

(57) **Abstract**

A method for manufacturing a decorative substrate (1) for decorative panels (30), like floor, wall or furniture panels, comprising the steps of:
a) providing a first substrate (10) having a printed color chart (11), said color chart having at least one color spot (12);
b) determining a reference ICC profile (RICC) from said color chart (11);
c) providing a printing system (20) comprising one or more output image device (OID1, OID2...OIDn), said output image device (OID1, OID2 ...OIDn) comprising at least one printer (22), wherein each output image device (OID1, OID2... OIDn) of the system (20) comprises a respective output ICC profile (OICC1, OICC2... OICCn);
d) providing a master image and a second substrate (21);
e) applying said reference ICC (RICC) profile to said master image;
f) selecting at least one output image device of the system (20), said selected output image device (OID1, OID2... OIDn) being a printer (22), and converting said master image from the reference ICC profile (RICC) to the output ICC profile (OICC1, OICC2... OICCn) of the selected output image device (OID1, OID2... OIDn);
g) printing said master image via said selected output image device (OID1, OID2... OIDn) for forming said decorative substrate (1).

## Description

The present invention relates to a method for manufacturing a substrate, preferably of the type used in panels having a decorative surface, or so-called decorative panels. The invention also relates to a method for manufacturing such panels.

Preferably the panels obtainable with the method of the invention may relate to furniture panels, ceiling panels, flooring panels or similar, wherein these panels preferably comprise a wood-based substrate, such as an MDF or HDF substrate (Medium or High Density Fiberboard) or a substrate material consisting of or essentially made of wood particleboard. In alternative embodiments the panel can comprise a polymeric based substrate, preferably thermoplastic based substrate, such as PVC (Polyvinyl chloride), PP (Polypropylene), LVT (Luxury Vinyl Tile), SPC (Solid Polymer Composite) or WPC (Wood polymer composite) based substrate. The invention can further relate to mineral-based board of cement-based board, like for example, fiber cement based board or magnesium oxide based board.

Traditionally, the decor or pattern of such panels is printed on a printable substrate, for example a paper sheet, a board or a thermoplastic foil, by means of offset or rotogravure printing. The obtained decor paper is taken up as a decorative paper in a so-called laminate panel. For manufacturing the panels the DPL process can be practiced. According to the DPL process (Direct Pressure Laminate) the already printed paper or decorative paper is provided with melamine resin to form a decorative layer. Afterwards a stack is formed comprising at least a plate shaped substrate, said decorative layer and possibly a protective layer on top of said decorative layer, wherein said protective layer or overlay is based on resin and/or paper as well. Said stack is pressed and the press treatment results in a mutual connection or adherence of the decorative paper, the substrate and the protective layer, as well as in a hardening of the resin present in the stack. As a result of the pressing operation a decorative panel is obtained having a melamine surface, which can be highly wear resistant. At the bottom side of the plate shaped substrate a counter layer or balancing layer can be applied, or as an alternative a decorative layer might be attached to the bottom side as well, especially in the case of laminate panels for furniture. Such a counter layer or balancing layer or any other layer at the bottom side of the laminate panel restricts or prevents possible bending of the decorative panel, and is applied in the same press treatment, for example by the provision of a resin carrying paper layer as the lowermost layer of the stack, at the side of the stack opposite said decorative layer. For examples of a DPL process reference is made to EP 1 290 290, from which it is further known to provide a relief in said melamine surface during the same press treatment or pressing operation, namely by bringing said melamine surface in contact with a structured press element, for example a structured press plate. Preferably, said relief can be in register with the pattern on the decorative layer. In case of thermoplastic foil, for manufacturing the decorative panels thermal lamination or gluing can be practiced. According to the thermal lamination process the already printed sheet is fixed with action of heat and pressure on top of a substrate. Alternatively, the decorative sheet can be thermal laminated to a surface of a transparent or translucent thermoplastic protective layer. In this latter case, after thermal lamination, a stack is formed comprising at least a plate shaped substrate, said decorative sheet and the layer. Said stack can result in a mutual connection or adherence of the layers after thermal lamination or gluing of the decorative sheet with on top of the plate shaped substrate. As a result, a decorative panel is obtained.

The printing of the sheet, paper or foil, by means of an analog printing process, such as by rotogravure or offset printing, at affordable prices inevitably leads to large minimal order quantities of a particular decorative paper or foil and restricts the attainable flexibility. A change of decor or pattern necessitates a standstill of the printing equipment of several hours. This standstill time is needed for exchange of the printing rollers, the cleaning of the printing equipment and for adjusting the colors of the new decor or pattern to be printed.

Instead of analog printing techniques, digital printing techniques, especially inkjet printing techniques, are becoming increasingly popular for the creation of decors or patterns. Such digital techniques can enhance the flexibility in the printing of decors significantly. Reference is amongst others made to the EP 1 872 959, WO 2011/124503, EP 1 857 511, EP 2 431 190, EP 2 293 946, WO 2014/084787, WO 2015/140682 and the WO 2015/118451, where such techniques are disclosed.

During private practice, the inventors have noticed that digital printing requires a continuous operation of color match for each design to be printed in order to achieve the desired quality. Said color match operation has to be repeated for every production batch or sampling of the same design especially when this is printed using different printers and/or consumables like paper, ink or ink receiver layer.

Each printing or image input device, for example a scanner, comprise a specific color profile, known as ICC profile (International Color Consortium profile). In normal practice, a master image, acquired or to be printed, is converted from a color space that is independent from the device, for example L^{∗}a^{∗}b space, also known as profile connection space, to the ICC profile of the printing device. The ICC profile of each device has the scope of allowing the best possible replication of the image with the device itself and to promote a good repeatability of the print result on several devices. During private practice inventors have noticed that there can be color variation when printing the same design with multiple devices so that color match operation has to be performed. This means that, in practice, a new design has to be created for each printing device.

The present invention aims in the first place at an alternative method for manufacturing decorative substrate that, in accordance with several of its preferred embodiments, is directed to solve one or more of the problems arising in the state of the art.

Therefore, the present invention, in accordance with its first independent aspect, relates to a method for manufacturing a decorative substrate for decorative panels, comprising the steps of:
a) Providing a first substrate having a printed color chart, said color chart having at least one color spot;
b) determining a reference ICC profile from said color chart;
c) providing a printing system comprising one or more output image device, said output image device comprising at least one printer, wherein each output image device of the system comprises a respective output ICC profile;
d) providing a master image and a second substrate;
e) applying said reference ICC profile to said master image;
f) selecting at least one output image device of the system, said selected output image device being a printer, and converting said master image from the reference ICC profile to the output ICC profile of the selected output image device;
g) printing said master image via said selected output image device for forming said decorative substrate.

The inventors have found that by converting the master image from a reference ICC profile, determined on a printed sample, to the ICC profile of the selected output image device, instead of converting from the profile connection space, the accuracy of the conversion is increased, and it is possible to generate multiple output of the image using different devices of the system. The reference ICC profile is closer to the output ICC profile than the L^{∗}a^{∗}b space so that the accuracy of the conversion improved. The reference ICC profile, being calculated on a printed sample, can be based on a color gamut that is closer to that of the output device of the system and therefore that shifting the production or sampling operation from device to device by converting the master image to the output ICC profile via the reference ICC profile can cause an absence of, or a lower, color shift so that there is no need of color match operation or, if any, the color match is simplified. In the preferred embodiment the color chart of said first substrate represent a color gamut achievable with any of the output image devices of the system.

The step of determining the reference ICC profile involves a step of measuring at least a set of color coordinates of the at least one color spot of the color chart, preferably of all the color spots of the chart. Said determination of the ICC profile can be performed via dedicated software like for example ColorGate Production Server, X-Rite i1Profiler, Heidelberg Prinect Color Toolbox, GMG ColorProof.

In the most preferred embodiment said first substrate can be provided by printing said color chart via a selected one output image device of the system. Thanks to this solution it is assured that the chart, and the deriving reference ICC profile, represents a color profile that is achievable by one or more, preferably all the output devices in the system. Said selected output image device for printing the color chart on the first substrate can preferably be the main output device of the system. Within the context of the present invention with the expression "main output device" it is meant that said output device can be, for example, the output device with the highest importance in the system for the manufacturing purposes, for example the one having the highest production rate or the one dedicated to the manufacturing of the largest volume. Preferably, said selected output image device for printing the color chart on the first substrate can be an inkjet printer, more preferably a single-pass inkjet printer, although in alternative embodiment can also be a multi-pass inkjet printer. For example, said selected output image device for printing the color chart on the first substrate can be the printer selected for printing on the second substrate. Alternatively, said selected output image device for printing the color chart on the first substrate can preferably be the output being adapted for displaying images with the lowest gamut amongst the output image devices in the system. In this way, it is assured that the reference ICC profile represent a color profile that is achievable by any device in the system.

It is noted that said output image devices of the system can comprise any device adapted to display an image, not necessarily a printer. Preferably, said output image devices of the system are selected from the group comprising, for example consisting of: screen monitor, projector, single-pass inkjet printer; multi-pass inkjet printer, analog printers.

In some embodiment of the invention the printers of the system can comprise one or more printheads, preferably each one adapted to print one color. Said printhead can comprise one more nozzle for jetting the respective ink. Said printhead can be adapted to print to eject the respective ink with a respective color power up to a maximum color power, for example color intensity. Said maximum color power of the printer can vary from printhead to printhead and can depend on worn state of the printhead itself, or from presence of missing nozzles (non-printing or clogged nozzle). Said color power can also depend on the waveform of the printhead, wherein the waveform is a signal used to control the jetting of the ink and is specific for each printhead. In case the system comprises multiple printers, each printer of the system comprises a respective maximum color power.

Preferably said color chart on the first substrate can be printed by setting the maximum color power for printing said color chart being lower than the lowest maximum color power of the printer. In this way said chart can be obtained by any printer in the system.

In the most preferred embodiment, the system comprises a one or more input image device, wherein each input image device of the system comprises a respective input ICC profile. Said input images devices of the system can be configured to acquire one or more image, for example that can be stored in a memory unit. Preferably, said master image is provided by acquiring an image using an input image device of the system. In some examples, the input image device can be used to acquire analog or preferably digitalized images of real samples, like natural stone, cement, natural wood, marble, metals. It is noted that thanks to the solution of the first independent aspect it is possible to convert the master image from the input ICC profile to the output ICC profile, via the reference ICC profile instead via the L^{∗}a^{∗}b space, so that the conversion can be more accurate. The reference ICC profile defines a narrower gamut than that of most or all of the input image device so that the subsequent conversion to the output ICC profile is improved.

Said input image devices of the system are selected from the group comprising, or consisting of: scanner, photo camera or artificial image generator.

It is noted that said system can comprise one or more processing units, preferably one or more personal computers connected to said output image device and/or to said input image devices. One or more of said processing unit can be dedicated to performing the step of applying said reference ICC profile to the master image. It is also preferable that the master ICC profile itself is determined using a software via one of said processing units of the system. It is also to be noted that multiple processing unit can perform different operations of the method. Each processing unit can be adapted to perform one or more of said operation using one or more dedicated software, said software can be the same or different from processing unit to processing unit.

It is also to be noted that the devices of the system, said output image devices, said input image devices and/or said processing units, can be located in different locations.

In one special embodiment, on said first substrate, an image can be printed together or in substitution of said chart. Said image can be of any type. Said image can be printed by setting the maximum color power being lower than the lowest of the maximum color powers for the printers of the system. The method can comprise the step of reprinting said color chart and/or said image until one or more quality parameter are satisfied. It is noted that said quality parameters can be based on the specific manufacturing requirement, for example they can be based on the specific design or on specific customer quality requirement. Once the printed first substrate meets said quality parameters a reference print is obtained. In some embodiment said reference print can be digitalized, for example via said input image device and stored in a memory of a control unit.

Preferably said quality parameters can comprise: color intensity, color coordinates in a L^{∗}a^{∗}b space, presence of banding, missing nozzles, color uniformity, image resolution or print sharpness, presence of mist and/or satellites. It is noted that mist and satellites are printed defects caused by undesired printed dots.

In this special embodiment, the method can comprise the step of printing a sample image on said second substrate. Said sample image can be said master image. Preferably sample image can be different from the image printed on the reference print. The method can comprise the step of determining a deviation of said printed sample image from said reference print. Said deviation can be based on one or more of the quality parameters.

The method can comprise the step of perform a printing correction operation adapted to reduce or, preferably, nullify said deviation. Said printing correction operation can comprise banding compensation, color matching, image editing. Said printing correction operation can be performed thanks to dedicated software like Adobe Photoshop^{®}, GIMP, PAINT.net, Affinity Photo, Photopea, Pxlr or the like.

It is noted that since the correction it is based on said reference print, that is obtained by one printer of the system, instead of being based on a virtual model, like the master image itself, the correction is deeply simplified. For example, in case the correction operation is a banding compensation, since the correction it is based on the deviation from the reference print, there is no need for color matching operation. In standard practice banding compensation is based on the deviation of the sample print from the master print that has no banding, but banding compensation is obtained via modification of color intensity which causes a modification in the setting of the printer thereby requiring color matching operation. Since, according to this special embodiment, in the reference print the maximum color power is set and is achievable by any printer of the system, the banding compensation doesn't cause a change in color power. The color matching is thereby reduced to a color power adjustment and there is no need of further color matching so that the correction is simplified.

Preferably, the printer of the system can be configured to print with a set of inks comprising one more color ink. Said inks can be preferably pigment containing inks and can water-based, UV-based or hydro-UV based. Oil-based or solvent-based inks are not excluded. In the most preferred embodiment said set of inks comprises at least four inks selected for the group comprising: cyan, magenta, yellow, black, red, light magenta, light red, light cyan and light black and/or white. Preferably, light magenta and/or light red ink can comprise a lower pigment content than the respective non-light ink, preferably less than a fifth of said pigment content. According to the preferred embodiment the ink used for printing on the second substrate are similar, preferably, the same provided on the first substrate.

In the most preferred embodiment, the first printable substrate and the second printable substrate can comprise one or more features in common, preferably they have the same characteristics. Preferably said features in common can be selected from weight per square meter, thickness, material, glass transition temperature, plasticizer content, Gurley value, ash content, resin penetration time. Within the context of the invention with feature in "common" it is meant the feature, in particular the value thereof, are substantially the same in the first substrate and in the second substrate, and that the value of said features can be slightly different each other, preferably they can differ for less of the 10%, more preferably less of the 5%. The inventor has found that more the first and second substrate are similar each other, the higher is the accuracy with which the printed second substrate is closer to printed first substrate.

It is noted that from here on the expression "substrate" can be applied to any the first and the second substrate or both unless if one of the two substrates is explicitly indicated.

In one preferred embodiment, the substrate can be made of paper. In case the substrate is made of paper, it is preferably in form of a paper sheet having a base paper weight, i.e. without ink receiving layer, higher than 20 grams per square meter, preferably between 50 to 100 grams per square meter, e.g. between 60 and 80 grams per square meter. Preferably, the paper sheet comprising the ink receiver layer shows a resin penetration time lower than 3 sec. Preferably, the paper sheet is opaque and/or contains titanium oxide as a whitening agent and/or other inorganic fillers. Alternatively, the paper sheet may be a colored, pigmented and/or dyed base paper. The paper layer can show a mean air resistance as expressed in Gurley value below 40 sec, preferably below 25 sec. Paper showings said mean air resistance are more prone to impregnation with resins.

In some embodiments it is preferred that the paper used for the substrate is free from inorganic fillers, like whitening agents or pigments, for example titanium oxide. The paper layer can be made of alfa cellulose.

In a special embodiment the substrate can comprise a paper sheet having a base paper weight, i.e. without ink receiving layer, lower than 50 grams per square meter, preferably between 20 to 50 grams per square meter. The paper layer according to this special embodiment can show a mean air resistance as expressed in Gurley value below 15 sec. The paper layer according to this special embodiment can be used during a "dry press operation" during HPL, CPL or DPL lamination. With dry press it is meant that the printed paper is not impregnated, but it is sandwiched between two paper layers which contain resin and the bonding is performed during lamination.

In another preferred embodiment, the substrate can made of a polymeric material. In the most preferred embodiment, the first substrate is preferably in form of a thermoplastic foil, for example made of polyvinylchloride (PVC), polyethylene (PE) or polypropylene (PP) or PET. In this case the substrate can comprise a thickness ranging between 40 micron and 200micron.

In the preferred embodiment said substrate is in form of a sheet or foil. Anyway, in some special embodiment, said substrate can be in the form of a rigid bord or panel. In this case the substrate can be a wood based panel, for example MDF or HDF, or it can be made of polymeric material, preferably thermoplastic material, for example made of polyvinylchloride (PVC), polyethylene (PE) or polypropylene (PP), polyester or PET. In this latter case, the substrate made of a panel of polymeric material, the panel can be an LVT or SPC panel. In some other embodiment the rigid substrate can be made of a mineral based material, like fiber cement material, MgO or the like.

The substrate can comprise or be provided with an ink receiver layer before being printed upon. In some embodiments the method can comprise the step of providing substrate with the ink receiver layer, preferably in line with said printer.

Said ink receiver layer can be or be provided in a predetermined amount between 0.5 g/sqm and 50 g/sqm dry weight.

Preferably the ink receiver layer comprises at least a binder and/or a pigment.

Preferably, said substrate is provided with 0.2 to 10 g/m², and preferably between 0.5 and 5 g/m² dry coating weight of pigment in said ink receiver layer. Preferably said pigment has a BET surface area between 10 and 1600 m²/g, and preferably between 15 and 500 m²/g.

According to the most preferred embodiment, for the pigment of said ink receiver layer at least or mainly silica particles are used. According to variants, for the pigment of said ink receiver layer at least or mainly particles are used chosen from the list consisting of calcium carbonate, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers. According to some deviant embodiments, the ink receiver layer can also be pigment free.

Preferably, said substrate is provided with 0.2 to 7 g/m², and preferably between 0.5 and 5 g/m², dry coating weight of a binder in said ink receiver layer. According to the most preferred embodiment, for the binder in said ink receiver layer at least or mainly polyvinyl alcohols are used.

According to variants, the ink receiver layer includes, as a binder, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylenevinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinylacetate, block copolymers based on polyvinylalcohol, acrylates, latexes, polyvinyl derivaties, VCVAC derivatives, polyurethanes based on polyols and isocyanates, polyurethanes based on polycarbamates and polyaldehydes, e.g. both as a watery dispersion/emulsion or a watery or solvent solution.

As stated above preferred binders for the ink receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

Preferably, said ink receiver layer has, globally seen, a pigment to binder ratio between 0/1 or 0.01/1 and 25/1, preferably between 0/1 or 0.01/1 and 20/1. It is not excluded that the ink receiver layer is non uniform and shows layerwise or areawise differences in composition, in which case the above values are average values for the totality of the inkjet receiver layer.

The ink receiver layer can further comprise a crosslinking agent. Preferably, the ink receiver layer can preferably comprise a content of crosslinking agent below 5 % based on dry weight of the composition. The crosslinking agent can be preferably selected from the group comprising: aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The ink receiver layer can further comprise a dispersant. A dispersant is an oligomer or polymer which stabilize the liquid dispersions of pigment contained in the ink against flocculation. The dispersant can comprise polycarboxylates, polyphosphates, a polyionic polymer, preferably polyDADMAC (Polydiallyldimethylammonium chloride) polyamine or alumina salts.

Preferably, the ink receiver layer is provided with less than 10 %, more preferably less than 5% based on dry coating weight of dispersant, for example between 5 and 0%. Preferably, said ink receiver layer has, globally seen, a pigment to dispersant ratio between 10/1 and 100/1.

The ink receiver layer can also comprise a flocculant, preferably a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment contained in the ink thereby improving its absorption. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetration to far down into the ink receiver layer. Mainly the vehicle of the ink, e.g. the water in the case of waterbased inks, is absorbed deeper down into the ink receiver layer.

Preferably, ink receiver layer is provided with 20 to 60 %, based on dry coating weight of flocculating agent, in particular of metal salt.

The ink receiver layer may also comprise one or more of the following agents:
- Agents altering, more particularly lowering, the pH of said ink receiver layer. Preferably the pH of the ink receiver layer composition is lowered to pH 6 or lower, by selecting the amount and type of said agent, which selection is within the ambit of the skilled man. Preferably said agent is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 6 or less, increases the chemical affinity of the inkjet receiver layer with the ink and will interfere with the electrosteric stabilization function on the pigment, such that the dispersion of the pigments in the ink will become destabilized quickly.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 1 g/m², preferably between 0.05 and 0.5 g/m²; and/or defoaming agent between 0.005 and 1 g/m², preferably between 0.05 and 0.5 g/m²; and/or fungicide between 0.005 and 1 g/m², preferably between 0.05 and 0.5 g/m².

According to the most preferred embodiment said inkjet receiver layer is present on the substrate in the form of a unique layer. Anyway, it is not excluded that said inkjet receiver coating is in the form of two layers, wherein respectively a first layer with a first composition and a second layer with a second composition wherein said first and second composition may be either the same or different compositions.

The method can comprise the step of performing an image processing operation on said master image. Said image processing operation can involve an image editing operation, for example using Photoshop^{®} or other software. Preferably during said image processing operation the master image is displayed on one output image device of the system, for example a monitor, using the reference ICC profile.

The obtained decorative sheet can be used as decorative substrate in decorative panels, for example floor, wall, ceiling or furniture panel. The said decorative panels may be of the type comprising a support layer and a top layer, the top layer comprising at least the decorative layer. According to alternative embodiments, the printed layer can be used for decorative surfaces in general, for example wallpaper.

The support layer can be a wood-based board or panel, preferably a such as to a particle board or an MDF or HDF board.

Alternatively, the support layer can be made of a polymeric material, preferably a thermoplastic material, for example made of polyvinylchloride (PVC), polyethylene (PE) or polypropylene (PP), PET. It is also possible that the support layer is comprises a mineral-based or a cement-based board, for example an MgO-based or a Portland cement board. Said mineral-based or cement-based board can comprise fiber, for example glass or cellulose fibers.

In the preferred embodiment, in case the substrate comprises a paper sheet, the printed second substrate can be impregnated with a resin, more preferably a thermosetting resin. The thermosetting resin can preferably be a melamine-based resin. Preferably the paper sheet can be impregnated with a quantity of thermosetting resin equaling 40 to 250% dry weight of resin as compared to weight of the paper. Preferably the paper sheet can be provided with such an amount of thermosetting resin, that at least the paper core is satisfied with the resin. Such satisfaction can be reached when an amount of resin is provided that corresponds to at least 1.5 or at least 2 times the paper weight. It should be clear that the resin, which is provided on the paper sheet, is not necessarily only available in the core of the paper, but may form surface layers on both flat sides of the paper. The inkjet receiver coating may then be present on the surface of the paper with the intermediary of such a surface layer of thermosetting resin. Preferably, the obtained resin provided paper layer, i.e. after provision of the thermosetting resin, has a relative humidity lower than 15%, and still better of 10% by weight or lower. Preferably the step of providing said paper layer with thermosetting resin involves applying a mixture of water and the resin on said paper layer. The application of said mixture might involve immersion of the paper layer in a bath of said mixture and/or spraying, jetting or otherwise coating said mixture on said paper. Preferably the resin is provided in a dosed manner, for example by using one or more squeezing rollers and/or doctor blades to set the amount of resin added to the paper layer. Next to melamine-based resin, other alternatives such as urea-based resin, polyurethane-dispersion resin, acrylate dispersion resin and combinations thereof can be used.

The method can then comprise the step of hot pressing the printed and resin provided paper sheet, at least to cure the resin. This paper sheet can be hot pressed on top of a substrate, preferably a wood-based substrate like MDF or HDF, so that this hot pressing simulates or is part of a DPL process. It is of course not excluded that this hot pressing simulates or is part of a CPL (Compact Laminate) or an HPL (High Pressure Laminate) process in which the printed paper sheet is hot pressed at least with a plurality of resin impregnated core paper layers, e.g. of so called Kraft paper, forming a substrate underneath the printed paper sheet, and wherein the obtained pressed and cured laminate layer, or laminate board is, in the case of an HPL, glued to a further substrate, such as to a particle board or an MDF or HDF board.

In case of a second substrate comprising a thermoplastic sheet, the method can involve a thermal lamination of said thermoplastic foil with a second thermoplastic foil, for example a transparent thermoplastic foil. Alternatively, the method can involve a thermal lamination of said thermoplastic foil on a substrate, for example a flexible or rigid substrate. Said substrate can be made of a polymeric material, a wood-based material or mineral based material.

Thermal lamination can be conducted at a temperature above 80°C, preferably above 100°C.

In the preferred embodiment, wherein the panel is a floor panel, the method may comprise the step of providing said support layer with coupling elements for mechanical coupling to another floor panel. Said step of providing the support layer with coupling element is preferably performed after that the decorative layer has been provided on the support layer. It is noted that said support layer can also be in form of large board that are cut into multiple laminate panel.

The method of the invention can comprise the step of providing said top layer, including at least said decorative layer, onto said support layer. In particular, the decorative layer can be pressed, heat pressed, thermal laminated or glued on top of the support layer. in the most preferred embodiment, the decorative layer is preferably heat pressed on top of the support layer after that it has been impregnated with a resin. Said resin being preferably a melamine-based resin.

The top layer can further comprise a wear layer, preferably a transparent layer and possibly comprising hard particles. Said wear layer can comprise a paper sheet impregnated with a resin, preferably the same impregnating the printed layer. In some embodiments, said wear layer can comprise a thermoplastic sheet for example made of PVC or PP. The protective layer can be thermal laminated on top of the decorative layer. The thermal lamination of the protective layer on the decorative layer can happen before, during and or after the decorative layer has been provided on the support layer. For example, the protective layer is thermal laminated on top of the decorative layer in the same step of thermal lamination of the decorative layer itself on top of the support layer. In a second preferred embodiment, the protective layer is thermal laminated on top of the decorative layer to form the top layer and subsequently the top layer is either thermal laminated or glued on top of the support layer.

The method of the invention may comprise the step of forming a relief on the surface of said panel. Said relief is preferably formed at least in said top layer. In the most preferred embodiment the relief is in register with the printed decor provided on the printed layer, i.e. the relief has structural feature corresponding to structural features of the printed decor. For example, in case of a printed decor representing a wood imitation the relief has an excavation shaped to imitate a wood pore where the printed decor shows a wood pore.

The relief can be embossed in the top layer during the heat pressing step using an embossment plate or roller. The relief can also be obtained before or after that the top layer is provided on the support layer.

It is noted that the fact that the correction of banding is improved when based on a reference print forms an innovative aspect that is independent from the first independent aspect and in particular from the conversion of color profiles via a reference color profile. Thereto according to its second independent aspect the invention relates to a method for manufacturing a decorative substrate for decorative panels, comprising the steps of:
a) providing a first printable substrate;
b) providing a printing system comprising one or more output image device, said output image device comprising at least one ink jet printer said inkjet printer comprising at least one printhead, wherein each printhead is adapted to print a respective ink with a color power up to a maximum color power;
c) printing a predetermined image and/or a color chart on said first printable substrate using said a selected first printer of the system, to obtain a reference print;
d) optionally reprint said predetermined image until one or more quality parameters are satisfied;
e) optionally digitalizing said printed image via an input image device;
f) providing a master image
g) selecting at least one output image device of the system, said selected output image device being a printer, and printing a sample image on a second substrate to obtain a sample print, preferably said sample image corresponding to said master image;
h) comparing the sample print to the reference print and determining a deviation of said sample print form said reference print, preferably said deviation comprising banding determination;
i) performing a print correction operation, preferably involving banding compensation;
j) printing said master image on a second substrate using said second selected printer to obtain the decorative substrate.

Thanks to this solution, since the correction is based on a reference print that has been printed by a printer of the system, and that preferably meets the quality parameters, instead of being based on a digital master image that defines a non-real result to be achieved, the correction itself causes a limited modification in the setting of the printer so that after application of said correction no further color management or correction operation are necessary. In the preferred embodiment, said system comprises multiple printers each printer having multiple printheads, wherein each printhead is able to jet the respective color with a color intensity up to a respective color power. In this preferred embodiment, the reference print is printed with a maximum color power being lower than the lowest amongst the maximum powers of the printers. In this way the reference color print is printed with a reference color power that is achievable by any printer of the system, and the correction, in particular the banding compensation, doesn't lead to a variation of the color power that would lead to the necessity of further color matching operations.

It is noted that the method according to said second independent aspect can comprise one ore more of the features described in relation to the first independent aspect.

With the intention of better showing the characteristics according to the invention, in the following, as an example without limitative character, an embodiment is described, with reference to the accompanying drawings, wherein:
Figure 1 schematically shows a top view of a decorative sheet obtainable through the method of the invention;
figure 2 shows an enlarged view of a section according to plane II-II of figure 1;
figure 3 schematically shows some steps in a method in accordance with the first aspect of the invention;
figure 4 schematically shows a top view of a printed substrate used in the method of the invention;
figure 5 schematically shows the architecture of a printing system used in the method of the invention and some step for managing said printing system according to the method of the invention;
Figure 6 schematically shows some steps in a method for manufacturing laminate panel;
figure 7 shows a perspective view of a panel obtainable through the method of figure 5;
figure 8 shows some steps of an alternative embodiment of the method of the invention.

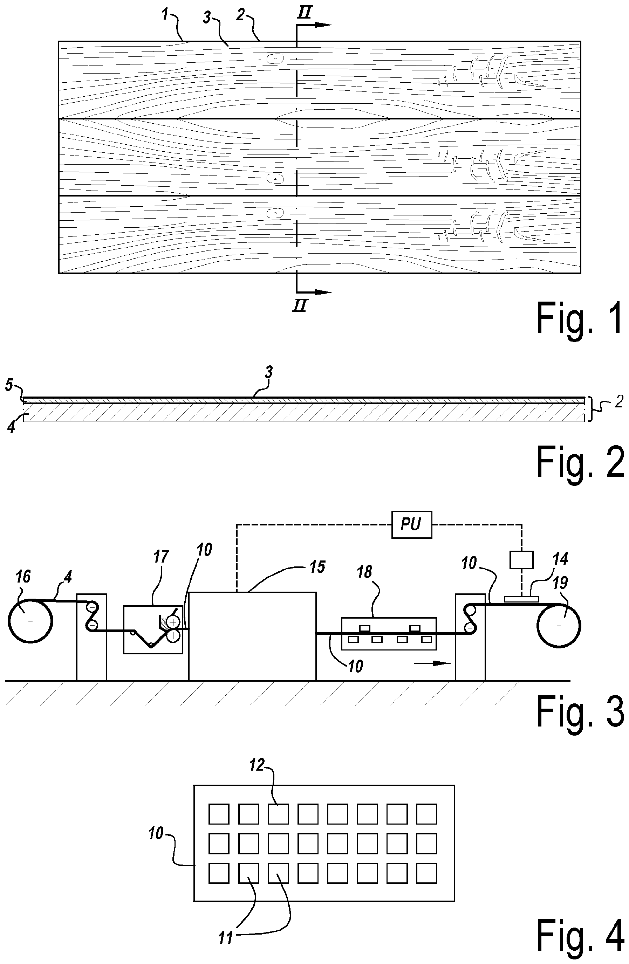

Figure 1 shows a decorative sheet 1 for laminate panels obtainable through the method of the invention. Said decorative sheet 1 comprises a printed substrate 2 having a decorative pattern 3 on one of its surfaces. In the example, the decorative pattern 3 represents a wood decor.

Figure 2 shows an enlarged view of the section along plane II-II of figure 1. Figure 2 shows that the printed substrate 2 comprises a base paper 4 and an ink receiver layer 5 that coats the surface of the base paper 4 that is provided with the printed pattern 3.

The base paper 4 of the embodiment comprises a weight, i.e. without ink receiving layer 5, higher than 20 grams per square meter, preferably between 50 to 100 grams per square meter, e.g. between 60 and 80 grams per square meter. Preferably, the base paper 4 comprising the ink receiver layer 5 shows a resin penetration time lower than 3 sec. Preferably, the base paper 4 is opaque and/or contains titanium oxide as a whitening agent and/or other inorganic fillers. Alternatively, the base paper 4 may be a colored, pigmented and/or dyed base paper. The base paper 4 can show a mean air resistance as expressed in Gurley value below 40 sec, preferably below 25 sec.

In the example the ink receiver layer 5 comprise polyvinyl-alcohol as binder, silica particles as pigments and a cationic metal salt chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate.

Said ink receiver layer 5 is provided in a predetermined amount between 0.5 g/sqm and 5 g/sqm on the base paper 4.

Figure 3 shows some steps of a method for obtaining the decorative sheet 1 according to the invention. The method comprises a first step of printing a color chart 11 on a first printable substrate 10 as shown in figure 4. The first printed substrate 10 preferably comprises a base paper 4 and an ink receiver layer 5 as described above in relation to the decorative sheet 1. The color chart 11 has a plurality of color spots 12. Each color spot 12 comprises a printed color characterized by a specific color having respective visual color coordinates. Said color coordinates can be identified in the CIELAB space.

The color chart 11 is printed using a first inkjet printer 15 using a plurality of inks preferably selected from the group comprising: cyan, magenta, red, yellow and black. Thereto each color spot 12 comprises also a set of color coordinate that can be expressed in the CMYK or CRYK space. The inks are preferably pigment containing ink, more preferably water-based.

Figure 3 shows that the paper sheet 4 is uncoiled from a first roll 16 and transported to a coating station 17 for applying the ink receiver layer 5 to obtain the first substrate 10. The obtained printable first substrate 10 is fed to the first inkjet printer 15.

In the example, the first inkjet printer 15 is a single pass inkjet printer for printing on decorative paper, and it is preferably an industrial inkjet printer. Said first inkjet printer 15 comprises multiple printheads, each being dedicated to print one ink. Each printhead comprises multiple nozzles. The first inkjet printer is adapted to print with a respective first output color profile, preferably an ICC profile.

The printed first substrate 10 is then then dried to obtain the decorative sheet 1. In the example a hot air oven 18 is used, but alternatively other heating equipment can be used, such as microwave or infrared drying equipment. The obtained printed first substrate 10 is then rolled up in a second roll 19.

The operation of printing the chart 11 on the first substrate 10 can be repeated multiple times, until the chart 11 meets predetermined quality requirements and/or parameters. Said quality requirement and/or parameters can be evaluated under visual observation of the chart 11 and/or after testing the chart using dedicated instruments like, for example, a spectrophotometer 14.

Once said quality requirements and/or parameters are met color coordinates can be measured with a scanner or a spectrophotometer 14 to obtain a first set of color coordinates for each color spot 12. Said first sets of color coordinate is sent to a processing unit PU, that determines a reference color profile RICC. Preferably, said processing unit PU, for example a personal computer, determine the reference ICC profile using a software like for example ColorGate Production Server, X-Rite i1Profiler, Heidelberg Prinect Color Toolbox. It is noted that the reference ICC profile represents the color profile a real printed sample that meets the quality requirements and/or parameters. In fact, it is noted that the color profile of the chart 11 is influenced not only by the output color profile of the first printer 15, but also from the paper 4, the ink receiver layer 5 and from other factors.

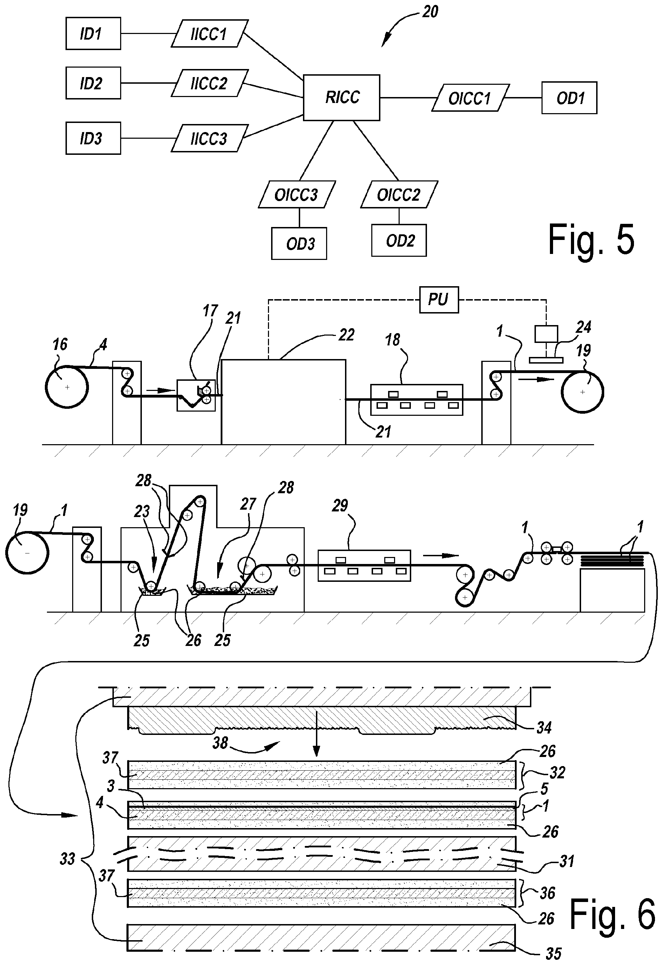

Figure 5 shows a printing system 20 comprising a plurality of output image devices OD1, OD2... ODn, in the example said output images devices comprise multiple industrial inkjet printers, preferably inkjet single-pass and/or multi-pass printers, and can also comprise one or more digital display device like, for example a monitor, preferably connected to the processing unit PU. It is noted that each output image devices OD1, OD2... ODn comprise a respective output ICC profile OICC1, OICC2, ..., OICCn. It is also noted that the first inkjet printer 15 used for printing the chart 11 on the first substrate 10 is one of said output image devices OD1, OD2... ODn of the printing system 20. In the illustrated preferred example, the first inkjet printer 15 is chosen as reference printer of the printing system 20 for printing the first substrate 10 as it is the printer with the highest production rate and/or dedicated to the largest production volume in the system.

For printing said color chart 11 the maximum color power is set for being lower than the lowest maximum color power of the printers of a printing system 20.

The printing system 20 further comprises multiple input image devices ID1, ID2,... IDn, in the example said input images devices comprise a scanner and a photo camera, preferably connected to the processing unit PU. It is noted that each input image device OD1, OD2... ODn comprise a respective input ICC profile IICC1, IICC2, ..., IICCn. It is noted that each of the input ICC profile IICC1, IICC2, ..., IICCn, generally defines a broader color gamut than those defined by the output ICC profiles OICC1, OICC2, ..., OICCn.

Figure 5 shows that the preferred embodiment, comprises acquiring a master image using one of the input devices ID1, ID2,... IDn, for example a real wood sample is scanned using a scanner of the printing system 20 with its respective input color profile IICC. Subsequently, to the master image it is applied the reference color profile RICC.

To the master image in the reference color profile RICC can then be applied the output color profile OICC1, OICC2,... OICCn of a selected output OD1, OD2, ... ODn, of the system 20, for example a second printer being an industrial single pass inkjet printer. It is noted that the reference color profile RICC preferably define a color space that is smaller than the color space defined by the output color profile OICC of the selected output device OD, or in any case reproducible by any of the output devices, therefore the image editing and/or color management operation is simplified as to the master image it is immediately applied a color profile that is reproducible by any output device of the system, and any variation between the output devices of the system is nullified or in any case easily and quickly resolvable.

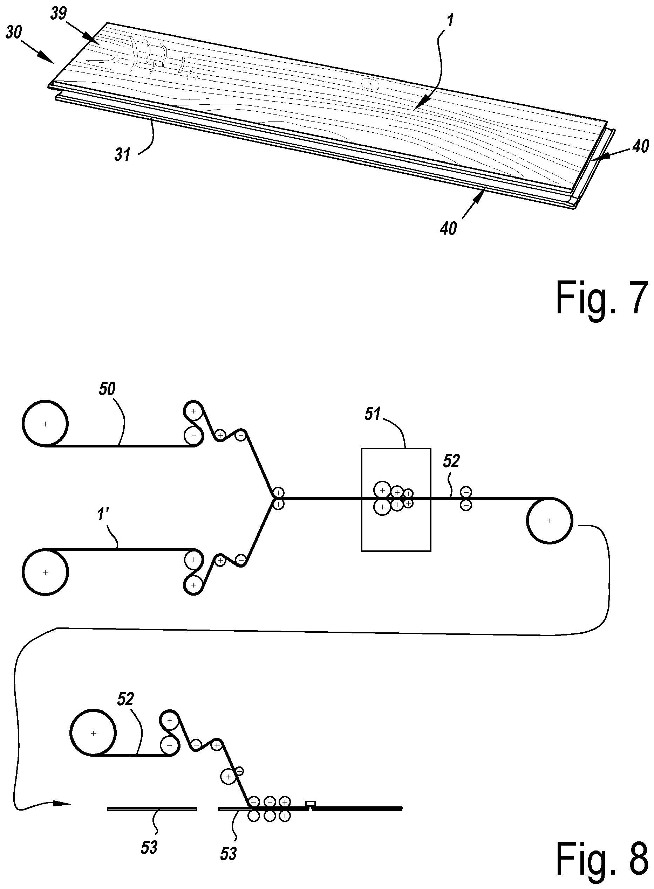

Figure 6 shows some further step of the method shown in figures 3,4 and 5 for manufacturing the decorative sheet 1 and for manufacturing a laminate panel 30, as illustrated in figure 7, starting from the decorative sheet 1

A paper sheet 4 is uncoiled from a first roll 16 and fed to a coating station 17 for applying the inkjet receiver coating 5 and obtain a second printable substrate 21. In the example the second printable substrate 21 is similar, and preferably identical to the first printable substrate 10.

The printable second substrate 21 is then fed to a selected second inkjet printer 22 of the printing system 20 for printing the master image on the second printable substrate 21 itself thereby obtaining the printed second substrate 21. The second inkjet printer 22 of the example is a single pass industrial printer.

The printed second substrate 21 is then then dried to obtain the decorative sheet 1. In the example a hot air oven 18 is used, but alternatively other heating equipment can be used, such as microwave or infrared drying equipment. The obtained decorative sheet 1 is then rolled up in a second roll 19.

The decorative sheet 1 is transported to a first impregnation station 23 where said decorative sheet 1 is immersed in a bath 25 of a thermosetting resin 26, more particularly a mixture of water and thermosetting resin composition. Said resin preferably being a melamine based resin. The decorative sheet 1 is then allowed to rest while in this case being transported upwards. The resting allows for the resin 26 to penetrate the core of the decorative sheet 1. The decorative sheet 1 then comes into a second impregnation station 27 where it is, in this case, again immersed in a second bath 25 of resin 26, more particularly a mixture of water and resin. A set of squeezing rollers and doctor blades 28 allows to dose the amount of resin applied to the decorative sheet 1.

The impregnated decorative sheet 1 is then dried and its residual humidity level is brought to below 10%. In the example a hot air oven 29 is used, but alternatively other heating equipment can be used, such as microwave or infrared drying equipment.

In the example the decorative sheet 1 is cut to sheets and heat pressed between a substrate 31, for example made of MDF, and a transparent layer 32 by means of a hot press 33. Said transparent layer 32 can be for example a resin impregnated overlay paper.

In the embodiment of figure 6 an optical sensor 24, for example a camera, a scanner or a spectrophotometer, evaluates the printed decor 3 on the decorative sheet 1 to check if predetermined quality parameters are met. In the example the optical sensor 24 evaluates the presence of the so called banding effect. The banding effect is a variation of color intensity in a transversal section of the printed surface so that in this transversal section, or band, the color intensity differs, normally is lower, than in adjacent transversal sections. The result of said evaluation of the quality parameters is sent to a processing unit PU, for example a personal computer, connected to the optical sensor 24 and to the second inkjet printer 22. The processing unit PU is adapted to determine a deviation of the printed second substrate from the said first printed substrate and perform a banding compensation operation on the master image in order to correct the evaluated banding defect, said banding compensation operation can be performed using a dedicated software like AVT or Global Graphics. In the embodiment the banding compensation is performed on the master image using as a reference the digitalized first printed substrate 10, so that since the maximum color power is set in the first substrate and is achievable by any printer of the system 20, the banding compensation doesn't cause a change in the setting of the printer and there is no need of color matching so that the correction is simplified.

Figure 6 further illustrates that the impregnated decorative sheet 1 is taken up in a stack to be pressed in a short daylight press 33 between upper and lower press plates 34-35. Said stack comprises from bottom to top a counter layer 36, the plate shaped substrate 31, the abovementioned impregnated decorative sheet 1 and transparent layer 32, wherein the counter layer 36 and the transparent layer 32 both comprise a paper sheet 37, in case of the transparent layer 32 called overlay paper, and resin 26. The stack is then pressed, with the application of pressure and heat and the press treatment results in a mutual connection between the constituent layers 1-32-36 including the substrate 31, of the stack, as well as in a hardening or curing of the available resin 26. More particularly here a polycondensation reaction of the melamine-based resin takes place, having water as a byproduct.

The upper press plate 34 is a structured press plates having a structure relief 38 that provides a relief in the resinated surface of the panel 30 during the same press treatment, by bringing the structured surface of the upper press plate 34 into contact with the melamine of the wear layer formed by the transparent layer 32.

Figure 7 shows that the laminate panel 30 at least comprise the substrate 31, for example of HDF or MDF, and a top layer 39. The top layer 39 comprises a decorative layer formed by the decorative sheet 1. In the example the decorative panel 30 is a floor panel comprising coupling means 40 on the long and short edges for coupling with adjacent floor panels in a floor covering. As illustrated in figure 7 such coupling means or coupling parts 40 basically have the shape of a tongue and a groove.

Figure 8 shows an alternative embodiment of the invention wherein the decorative sheet 1', and the respective first printed substrate (not shown), comprises a base sheet made of thermoplastic material, preferably PVC. The decorative sheet 1' of this alternative embodiment is manufactured according to the method as described with reference to the figures from 1 to 6 above.

The decorative sheet 1' is thermal laminated, in a thermal lamination station 51, to a transparent wear layer 50 made of thermoplastic material, preferably PVC, to form a top layer 52 for a laminate panel.

The obtained top layer 52 is subsequently attached to a substrate 53, for example made of thermoplastic material like PVC or a mineral based board, via gluing or thermal lamination.

The present invention is in no way limited to the above described embodiments, but such methods, paper layers, panel may be realized according to several variants without leaving the scope of the invention.

The invention is further disclosed by the following item list as defined by the below numbered items.
1.- A method for manufacturing a decorative substrate for decorative panels, comprising the steps of:
   a) providing a first substrate having a printed color chart, said color chart having at least one color spot;
   b) determining a reference ICC profile from said color chart;
   c) providing a printing system comprising one or more output image device, said output image device comprising at least one printer, wherein each output image device of the system comprises a respective output ICC profile;
   d) providing a master image and a second substrate;
   e) applying said reference ICC profile to said master image;
   f) selecting at least one output image device of the system, said selected output image device being a printer, and converting said master image from the reference ICC profile to the output ICC profile of the selected output image device;
   g) printing said master image via said selected output image device for forming said decorative substrate.
2.- The method according to item 1, wherein the color chart of said first substrate represent a color gamut achievable with any of the output image devices of the system.
3.- The method according to any of the preceding items, wherein the step of determining the reference ICC profile involves a step of measuring at least a set of color coordinates of the at least one color spot of the color chart, preferably of all the color spots of the chart.
4.- The method according to any of the preceding items, wherein said first substrate can be provided by printing said color chart via a selected one output image device of the system.
5.- The method according to item 4, wherein said selected output image device for printing the color chart on the first substrate can be an inkjet printer, more preferably a single-pass inkjet printer.
6.- The method according to any of the preceding items, wherein said output image devices of the system are selected from the group comprising, for example consisting of: screen monitor, projector, single-pass inkjet printer; multi-pass inkjet printer, analog printers.
7.- The method according to any of the preceding items, wherein the system comprises a one or more input image device, wherein each input image device of the system comprises a respective input ICC profile.
8.- The method according to item 7, wherein said input images devices of the system can be configured to acquire one or more image, for example that can be stored in a memory unit.
9.- The method according to item 7 or 8, wherein said master image is provided by acquiring an image using an input image device of the system.
10.- The method according to any of the items from 7 to 9, wherein said input image devices of the system are selected from the group comprising, or consisting of: scanner, photo camera or artificial image generator.
11.- The method according to any of the preceding items, wherein said at least one printer of the system can be configured to print with a set of inks comprising one more color ink, preferably said set of inks comprises at least four inks selected for the group comprising: cyan, magenta, yellow, black, red, light magenta, light red, white, light cyan, light black.
12.- The method according to item 11, wherein said inks can be preferably pigment containing inks and can water-based, UV-based or hydro-UV based. Oil-based or solvent-based inks are not excluded.
13.- The method according to item 11 or 12, wherein the ink used for printing on the second substrate are similar, preferably, the same provided on the first substrate.
14.- The method according to any of the preceding items, wherein the first printable substrate and the second printable substrate can comprise one or more features in common, preferably they have the same characteristics.
15.- The method according to item 14, wherein said features in common can be selected from the group comprising, preferably consisting of: weight per square meter, thickness, material, glass transition temperature, plasticizer content, Gurley value, ash content, resin penetration time.
16.- The method according to any of the preceding items, wherein said first and/or second substrate can be made of paper, preferably decorative paper, or can be made of a polymeric, preferably thermoplastic, material.
17.- The method according to any of the preceding items, wherein said first and/or second substrate is in the form of a rigid bord or panel.
18.- The method according to any of the preceding items, wherein said first and/or second substrate is provided with an ink receiver layer before being printed upon.
19.- The method according to any of the preceding items, wherein the method comprises the step of performing an image processing operation on said master image.
20.- The method according to item 19, wherein said image processing operation involves an image editing operation, for example using Photoshop^{®} or other software.
21.- The method according to item 19 or 20, wherein during said image processing operation the master image is displayed on one output image device of the system, for example a monitor, using the reference ICC profile.
22.- The method according to any of the preceding items, wherein the printers of the system can comprise one or more printheads, preferably each one adapted to print one color, for example said printhead comprising one more nozzle for jetting the respective ink, preferably said printhead being adapted to print to eject the respective ink with a respective color power up to a maximum color power, for example color intensity.
23.- The method according to item 22, wherein said color chart on the first substrate is printed, by a printer of the system, by setting the maximum color power for printing said color chart being lower than the lowest maximum color power of the printer.
24.- The method according to any of the preceding items, wherein on said first substrate, an image is printed together or in substitution of said chart.
25.- The method according to any of the preceding items, wherein it comprises the step of reprinting said color chart and/or said image until one or more quality parameter are satisfied.
26.- The method according to item 25, wherein said quality parameters comprise one or more of the following: color intensity, color coordinates in a L^{∗}a^{∗}b space, presence of banding, missing nozzles, color uniformity, image sharpness, mist and/or satellites.
27.- The method according to item 25 or 26, wherein once the printed first substrate meets said quality parameters a reference print is obtained, preferably said reference print is be digitalized, for example via said input image device and stored in a memory of a control unit.
28.- The method according to item 27, wherein it comprises the step of printing a sample image of said master image and determining a deviation of a printed sample image from said reference print.
29.- The method according to item 28, wherein it comprises the step of performing a printing correction operation adapted to reduce or, preferably, nullify said deviation, preferably said printing correction operation can comprise banding compensation, color matching, image editing.
30.- A method for manufacturing a decorative substrate for decorative panels, comprising the steps of:
   a) providing a first printable substrate;
   b) providing a printing system comprising one or more output image device, said output image device comprising at least one ink jet printer said inkjet printer comprising one or printhead, wherein each printhead is adapted to print a respective ink with a color power up to a maximum color power;
   c) printing a predetermined image and/or a color chart on said first printable substrate using said a selected first printer of the system, to obtain a reference print;
   d) optionally reprint said predetermined image and/or color chart until one or more quality parameters are satisfied;
   e) optionally digitalizing said printed image and/or color chart via an input image device;
   f) providing a master image
   g) selecting at least one output image device of the system, said selected output image device being a printer, and printing a sample image on a second substrate to obtain a sample print, preferably said sample image corresponding to said master image;
   h) comparing the sample print to the reference print and determining a deviation of said sample print form said reference print, preferably said deviation comprising banding determination;
   i) performing a print correction operation, preferably involving banding compensation;
   j) printing said master image on a second substrate using said second selected printer to obtain the decorative substrate.
31.- The method according to item 30, wherein said system comprises multiple printers each printer having multiple printheads, wherein each printhead is able to jet the respective color with a color intensity up to a respective color power.
32.- The method according to item 30 or 31, wherein the reference print is printed with a maximum color power being lower than the lowest amongst the maximum powers of the printers.
33.- Use of a decorative substrate as obtained in the method according to any of the preceding items in decorative panels, for example floor, wall, ceiling or furniture panel; or in a method for manufacturing decorative panels, for example floor, wall, ceiling or furniture panel.
34.- The method or panel of item 33, wherein said decorative panels are of the type comprising a support layer and a top layer, the top layer comprising at least the decorative sheet.
35.- The method or panel of item 33 or 34, wherein the support layer comprises:
   - a wood-based board or panel, preferably a such as to a particle board or an MDF or HDF board; or
   - a polymeric material, preferably a thermoplastic material, for example made of polyvinylchloride (PVC), polyethylene (PE) or polypropylene (PP), PET; or
   - a mineral-based or a cement-based board, for example an MgO-based or a Portland cement board.
36.- The method according to item 34 or 35 , wherein it comprises the step of hot pressing or thermal laminating or gluing the decorative sheet on said support.
37.- The method according to any of the items from 34 to 36, wherein said top layer can further comprise a wear layer, preferably a transparent layer and possibly comprising hard particles.

## Claims

1. A method for manufacturing a decorative substrate (1) for decorative panels (30), like floor, wall or furniture panels, comprising the steps of:
a) providing a first substrate (10) having a printed color chart (11), said color chart having at least one color spot (12);
b) determining a reference ICC profile (RICC) from said color chart (11);
c) providing a printing system (20) comprising one or more output image device (OID1, OID2...OIDn), said output image device (OID1, OID2... OIDn) comprising at least one printer (22), wherein each output image device (OID1, OID2... OIDn) of the system (20) comprises a respective output ICC profile (OICC1, OICC2... OICCn);
d) providing a master image and a second substrate (21);
e) applying said reference ICC (RICC) profile to said master image;
f) selecting at least one output image device of the system (20), said selected output image device (OID1, OID2... OIDn) being a printer (22), and converting said master image from the reference ICC profile (RICC) to the output ICC profile (OICC1, OICC2... OICCn) of the selected output image device (OID1, OID2... OIDn);
g) printing said master image via said selected output image device (OID1, OID2... OIDn) for forming said decorative substrate (1).

2. The method according to claim 1, **characterized in that** the color chart (11) of said first substrate (10) represent a color gamut achievable with any of the output image devices (OID1, OID2... OIDn) of the system (20).

3. The method according to claim 1 or 2, **characterized in that** said first substrate (10) is provided by printing said color chart (11) via a selected output image device (OID1, OID2... OIDn) of the system (20).

4. The method according to claim 3, **characterized in that** said selected output image device (OID1, OID2... OIDn) for printing the color chart (11) on the first substrate (10) is an inkjet printer, preferably a single-pass inkjet printer.

5. The method according to any of the preceding claims, **characterized in that** said output image devices (OID1, OID2...OIDn) of the system (20) are selected from the group comprising, for example consisting of: screen monitor, projector, single-pass inkjet printer; multi-pass inkjet printer, analog printers.

6. The method according to any of the preceding claims, **characterized in that** the system (20) comprises a one or more input image device (IID1, IID2...IIDn), wherein each input image device (IID1, IID2...IIDn) of the system (20) comprises a respective input ICC profile (IICC1, IICC2...IICCn).

7. The method according to claim 6, **characterized in that** said master image is provided by acquiring and/or forming an image using an input image device (IID1, IID2... IIDn) of the system (20).

8. The method according to claim 6 or 7, **characterized in that** said input image devices (IID1, IID2...IIDn) of the system (20) are selected from the group comprising, or consisting of: scanner, photo camera or artificial image generator.

9. The method according to any of the preceding claims, **characterized in that** the first printable substrate (10) and the second printable substrate (21) comprise one or more features in common, preferably they have the same characteristics.

10. The method according to claim 9, **characterized in that** said features in common can be selected from the group comprising, preferably consisting of: weight per square meter, thickness, material, glass transition temperature, plasticizer content, Gurley value, ash content, resin penetration time.

11. The method according to any of the preceding claims, **characterized in that** said first and/or second substrate (10, 21) can be made of paper, preferably decorative paper, or can be made of a polymeric, preferably thermoplastic, material.

12. The method according to any of the preceding claims, **characterized in that** said first and/or second substrate (10, 21) is in the form of a rigid bord or panel.

13. The method according to any of the preceding claims, **characterized in that** the method comprises the step of performing an image processing operation on said master image, preferably wherein during said image processing operation the master image is displayed on one output image device (IID1, IID2...IIDn) of the system (20), for example a monitor, using the reference ICC profile (RICC).

14. A method for manufacturing a decorative substrate (1) for decorative panels (30), like floor, wall or furniture panels, comprising the steps of:
a) providing a first printable substrate (10);
b) providing a printing system (20) comprising one or more output image device (OID1, OID2,..OIDn), said output image device (OID1, OID2... OIDn) comprising at least one ink jet printer (20) said inkjet printer (20) comprising one or printhead, wherein each printhead is adapted to print a respective ink with a color power up to a maximum color power;
c) printing a predetermined image and/or a color chart (11) on said first printable substrate (10) using a selected first printer of the system, to obtain a reference print;
d) optionally reprint said predetermined image and/or color chart (10) until one or more quality parameters are satisfied;
e) optionally digitalizing said printed image and/or color chart via an input image device (IID1, IID2...IIDn);
f) providing a master image;
g) selecting at least one output image device (OID1, OID2,..OIDn) of the system (20), said selected output image device (OID1, OID2... OIDn) being a printer (22), and printing a sample image on a second substrate (21) to obtain a sample print, preferably said sample image corresponding to said master image;
h) comparing the sample print to the reference print and determining a deviation of said sample print form said reference print, preferably said deviation comprising banding determination;
i) performing a print correction operation, preferably involving banding compensation;
j) printing said master image on a second substrate (21) using said second selected printer to obtain the decorative substrate (1).

15. The method according to claim 14, **characterized in that** said system (20) comprises multiple printers each printer having multiple printheads, wherein each printhead is able to jet the respective color with a color intensity up to a respective color power.

16. The method according to claim 14 or 15, **characterized in that** the reference print is printed with a maximum color power being lower than the lowest amongst the maximum powers of the printers.
